# EUROPEAN PATENT APPLICATION

(11) **EP 0 793 080 A1**
(43) Date of publication of application: **03.09.1997**
(21) Application number: 97200422.0
(22) Date of filing: 14.02.1997
(51) Int. Cl.: G01F 3/16, G01F 3/18

(54) **Device and method for dosing at least one medium, in particular, but not exclusively, a viscous medium**

(30) Priority: 29.02.1996 NL 1002481
(71) Applicant: Unitrans Techniek B.V., 2722 NN Zoetermeer (NL)
(72) Inventor: De Kadt, Marinus Bernardus Emerentianus, 2622 GW Delft (NL); De Wit, Franciscus Cornelis, 2411 EB Bodegraven (NL)
(74) Representative: Hooiveld, Arjen Jan Winfried

(57) **Abstract**

Device and method for dosing at least one medium, comprising
- a pump for pumping the medium to a cylinder/piston unit comprising a piston which is capable of reciprocating movement within a cylinder, the piston on either side defining a first and a second cylinder space respectively;
- at least two control valves, one valve directing the medium supplied by the pump to one cylinder space and the other valve discharging the medium from the other cylinder space, or vice versa, depending on the control position of the control valves;
which piston includes a dosing element extending outside the cylinder/piston unit, whereby the displacement of the dosing element during movement of the piston is proportional to the volume of the dosed medium, wherein the dosing device includes means for reversing the control position of the control valves in dependence on a predetermined magnitude of the pressure within the cylinder.

## Description

The invention relates to a dosing device for dosing at least one medium, said device comprising
- a pump for pumping said medium to a cylinder/piston unit comprising a piston which is capable of reciprocating movement within a cylinder, said piston on either side defining a first and a second cylinder space respectively;
- at least two control valves, one valve directing the medium supplied by said pump to one cylinder space and the other valve discharging said medium from the other cylinder space, or vice versa, depending on the control position of the control valves;
which piston includes a dosing element extending outside said cylinder/piston unit, whereby the displacement of said dosing element during movement of the piston is proportional to the volume of the dosed medium. This enables continuous dosing of medium while using only one cylinder/piston unit, since said unit incorporates a "double-action" cylinder/piston. No external is furthermore used, since the pump drives the unit itself.

A device of this kind is known from European patent publication No. 0 525 864 (Kuma Rsp B.V.). The known dosing device includes three cylinder/piston units for dosing various liquids, with the respective dosing elements of the liquids being interconnected in such a manner that said liquids can be dosed in a predetermined ratio. Each cylinder/piston unit is connected to a two-way switch valve, which is actuated in dependence on an end position of the respective piston. Each switch valve is provided with a liquid inlet and a liquid outlet, and also with two overflow pipes, which are each connected to one of the cylinder spaces. As already said before, the known device is self-driving, since the respective dosing elements are also interconnected by means of a leaf spring, which leaf spring is tensioned during movement of the dosing elements and which thus possesses sufficient energy-generating capacity for reversing the two-way switch valves at the end of each stroke.

One drawback of the known dosing device is that it is in particular unsuitable for dosing a viscous medium, that is, a medium having a (kinematic) viscosity of about 10,000 cSt (centistokes), since it is exactly viscous mediums that may exhibit the problem of a piston drawing a vacuum in a cylinder/piston unit at the beginning of a stroke, with all the adverse consequences for the (fine) dosing of the medium.

The object of the invention is to provide a simple, reliable and efficiently operating dosing device for dosing at least one medium (preferably a viscous medium), wherein the drawbacks of the prior art referred to above have been obviated.

In order to accomplish that objective a dosing device of the kind referred to in the introduction is characterized in that it includes means for reversing the control position of the control valves in dependence on a predetermined magnitude of the pressure within the cylinder. Said means form a pressure switch or pressostat, as it were, whereby a predetermined, preferably even adjustable magnitude of the pressure built up by the medium within the cylinder causes the control position of the control valves to be reversed, possibly also by means of "end switches", which actuate the two-way switch valves at the end of each piston stroke. The adjustability referred to above is of particular importance in view of the pump capacity which in practice may vary with each pump that is connected. Extensive testing has surprisingly shown that the dosing device in accordance with the invention is particularly suitable for dosing a medium having a viscosity of 10,000 cSt (centistokes), preferably 12,000 cSt, more in particular 15,000 cSt or higher.

A dosing device for dosing a viscous medium as such is known per se from European patent No. 0 141 930 (Reinhardt-Technik GmbH & Co.). In this known dosing device two pressure cylinders are used for each substance. Said pressure cylinders are connected to a supply pump for the viscous substance by means of supply pipes fitted with non-return valves, and also, via pressure pipes fitted with valves, to an external power source. Said European patent publication in particular makes mention of a plastic as the viscous substance, which plastic is for example applied to an object in the form of a coating. One drawback of the dosing device known from European patent No. 0 141 930 is the fact that, as already said before, two pressure cylinders must be used for each viscous substance in order to achieve continuous dosing of the substance, whilst furthermore one or more external power sources must be provided for driving the pressure cylinders. Because of this the known dosing device is a complex device, which consequently requires regular maintenance and sometimes even leads to the failure of one or more parts of the dosing device, with all the ensuing adverse economic consequences for the company in question. Furthermore it will be obvious that because of its complex construction this prior art dosing device is relatively costly, which renders its use on a wide scale in all kinds of small and/or medium-sized enterprises virtually impossible.

When different mediums are being mixed the problem frequently arises that the mixing ratio of the mediums varies during mixing. Especially when viscous mediums are being mixed the mixing ratio is frequently unstable as a result of the varying capacity of the supply pump(s) and uneven flow resistance in the supply pipes. Especially mixing systems for viscous substances with continuous dosing frequently exhibit problems when a particular component is to be added in a very small ratio. This situation occurs for example when a pigment is added to an injection moulding paste prior to further processing of the paste. A small deviation in the mixing ratio will result in a large colour deviation of the plastic products.

A preferred embodiment of a dosing device according to the invention for dosing at least two mediums is consequently provided with at least two cylinder/piston units, whilst the respective dosing elements are interconnected in such a manner that the mediums can be dosed in a predetermined ratio. More in particular this ratio is adjustable. This makes it possible to dose the various mediums in various precise ratios. In a special embodiment of a dosing device according to the invention each cylinder/piston unit is provided with said pressure switch (pressostat), for example in an associated supply pipe. In some cases it may suffice to provide one pressure switch for two or more cylinder/piston units, for example when identical units are being used and the respective mediums are to be mixed in identical ratios.

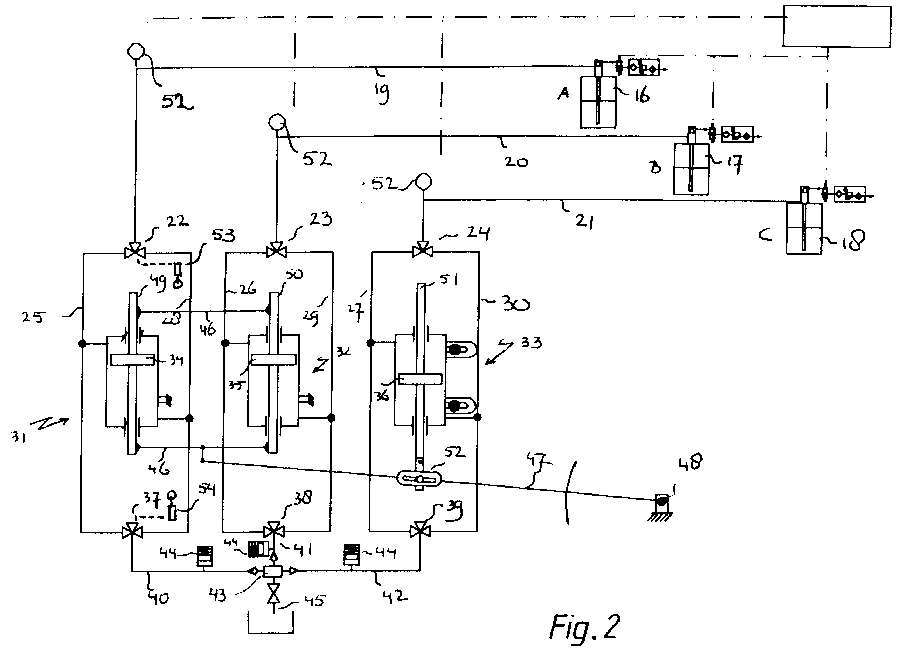

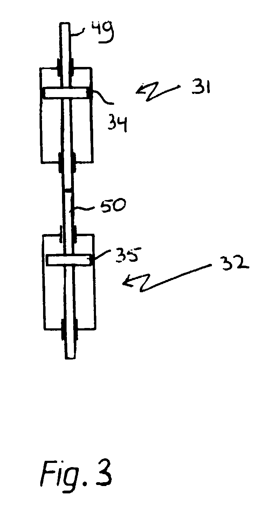

In another preferred embodiment of a dosing device according to the invention said dosing elements are mechanically interconnected. When the mediums corresponding with the respective dosing elements are to be dosed in a predetermined ratio of substantially equal (momentaneous) amounts, it is to be preferred to interconnect the respective dosing elements rigidly, in particular either by means of (cross) rods on either side of the respective cylinder/piston units (see Figure 2 to be discussed hereafter), or by means of a direct connection of the dosing elements at their respective end faces (see Figure 3 to be discussed hereafter) More in particular the dosing elements are interconnected via a lever mechanism for dosing the mediums corresponding therewith in a predetermined ratio of mutually differing (momentaneous) amounts (see Figure 2). In another preferred embodiment the dosing elements are hydraulically interconnected.

Another preferred embodiment of a dosing device according to the invention for dosing three mediums is provided with three cylinder/piston units, whilst the respective dosing elements of the first and the second cylinder/piston unit are mechanically interconnected in such a manner that the mediums corresponding therewith can be dosed in a predetermined ratio of at least substantially equal amounts, whilst the dosing element of the third cylinder/piston unit is connected, via a lever mechanism, to the assembly of the other dosing elements in such a manner that the third medium can be fine-dosed in a predetermined ratio. More in particular the dosing elements of the first and the second cylinder/piston unit are interconnected by means of a rod, to which rod the third element is connected by means of a lever, which lever is fixedly mounted near/at one of its ends. It is thereby preferred for the third dosing element to be connected to the lever at varying distances from said fixed end, which makes it possible to adjust the dosing ratio.

The invention furthermore relates to a method for dosing at least one medium, in particular, but not exclusively, a viscous medium, to be used in a dosing device according to the invention. According to this method
- said medium is pumped to a cylinder/piston unit comprising a piston which is capable of reciprocating movement within a cylinder, said piston on either side defining a first and a second cylinder space respectively;
- the medium supplied by said pump is directed to one cylinder space by a first control valve and discharged from the other cylinder space by a second control valve, or vice versa, depending on the control position of said control valves;
wherein a dosing element of the piston extending outside said cylinder/piston unit is displaced during the movement of said piston, thereby dosing said medium proportionally. As a special feature use is thereby made of means for reversing the control position of the control valves in dependence on a predetermined magnitude of the cylinder pressure.

The invention will be explained in more detail with reference to Figures illustrated in a drawing, wherein
- Figure 1 is a side view of a dosing device known from European patent publication No. 0 141 930;
- Figure 2 is a schematic wiring diagram of a preferred embodiment of a dosing device according to the invention, wherein three mediums are continuously dosed and subsequently mixed, and wherein mediums A and B are added in at least substantially equal amounts and medium C is added in a smaller amount; and
- Figure 3 refers to an interconnection of dosing elements of cylinder/piston units corresponding with mediums A and B which differs from that shown in Figure 2.

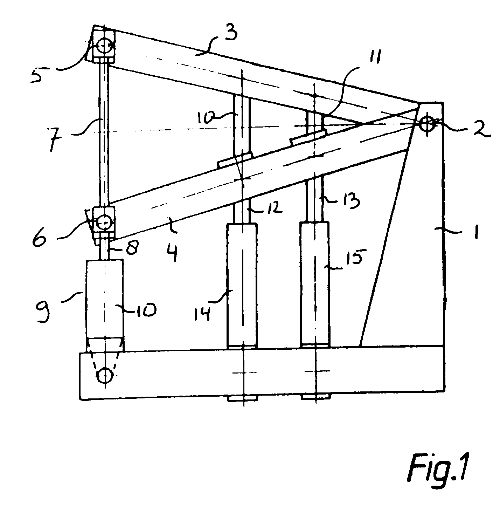

Figure 1 shows a column 1 with a horizontal pin 2 present at the upper side thereof. Two levers 3,4 are pivoted about said pin 2, with rods 7,8 being connected to the free ends 5,6 thereof. Rods 7,8 constitute the piston rods of pressure cylinders 9,10, so that levers 3,4 alternately occupy the upper and lower position (Figure 1). Connected to lever 3 are furthermore the ends of rods 10,11, which extend plunger-like into pressure cylinders (not shown) for a component A or B of a two-component plastic. In a similar manner lever 4 is pivotably connected to rods 12,13 of two pressure cylinders 14,15. The pressure cylinders are fixedly yet detachably connected to column 1.

As already said before, Figure 2 relates to a preferred variant of the invention. Proceeding from three mediums A,B,C, each medium is pumped, via a supply pipe (19,20,21), to a three-way valve (22,23,24) by means of a pump (16,17,18) - which is present in a storage vessel. The pipes are provided with means for monitoring the pressure in the cylinders, in this case pressure switches or pressostats (52), whose operation will be explained in more detail hereafter. At each three-way valve (22,23,24) the supply pipe is split into two branches (25,26,27; 28,29,30), which are each connected to one side of a "double-action" cylinder (31,32,33). The operation of each cylinder is as follows. Whilst the medium flows from one branch of the pipe (25,26,27, for example) into one cylinder space of the cylinder (31,32,33), the piston (34,35,36) moves out and the medium is forced out of the other cylinder space via the other branch (28,29,30) of the pipe to a second three-way valve (37,38,39). When the piston reaches its end position (which is "determined" with the help of an end switch (53)) and when the pressure switch (52) measures a predetermined pressure in the supply pipes (19,20,21) and consequently functions as a "fill ratio meter", the three-way valves (22,23,24; 37,38,39) are reversed, as a result of which the other branch (28,29,30) of the pipe is filled and the inflow and outflow functions are reversed. When the piston reaches the other end position ("observed" by an end switch (54)) and the predetermined pressure in the supply pipes (19,20,21) is reached again, the cycle is started anew.

From the second three-way valve (37,38,39) each medium flows to a mixing block (43) via an outlet pipe (40,41,42). The outflow pipe may be provided with a pulse damper (44) for levelling out the pressure difference resulting from the reversal of the direction of movement of the pistons. Finally the medium flows out in mixed condition via a central outlet pipe (45). In order to enable a uniform dosing of mediums A and B independently of differences in pump pressure and flow resistance etc., the dosing elements (49,50) (piston rods) of the cylinders (34,35) are rigidly coupled by means of a rod (46), both at their upper sides and at their bottom sides. By pivotably coupling the centre of the lower rod (46) to a lever (47) having a pivot point (48) at its other end it becomes possible to couple the dosing of medium C to the dosing of mediums A and B. To this end the dosing element (51) (piston rod) of cylinder (36) must be connected to the lever (47) by means of a guide (52). By varying the point at which the piston rod (51) engages the lever (47) with respect to the pivot point (48) it becomes possible to correct the dosing ratio of medium C to mediums A and B.

Figure 3 schematically shows a variant of the cross connection of the dosing elements (49,50) of the cylinders (31,32) shown in Figure 2, wherein the dosing elements (49,50), which in this case are positioned one behind the other, seen in longitudinal direction, with their end faces facing each other, are interconnected by means not shown. Parts that correspond with parts shown in Figure 2 are indicated by the same numerals as in Figure 2.

## Claims

1. A dosing device for dosing at least one medium, said device comprising
- a pump for pumping said medium to a cylinder/piston unit comprising a piston which is capable of reciprocating movement within a cylinder, said piston on either side defining a first and a second cylinder space respectively;
- at least two control valves, one valve directing the medium supplied by said pump to one cylinder space and the other valve discharging said medium from the other cylinder space, or vice versa, depending on the control position of the control valves;
which piston includes a dosing element extending outside said cylinder/piston unit, whereby the displacement of said dosing element during movement of the piston is proportional to the volume of the dosed medium, characterized in that said dosing device includes means for reversing the control position of the control valves in dependence on a predetermined magnitude of the pressure within the cylinder.

2. A dosing device according to claim 1 for dosing at least two mediums, wherein said dosing device is provided with at least two cylinder/piston units, whilst the respective dosing elements are interconnected in such a manner that the mediums can be dosed in a predetermined ratio.

3. A dosing device according to claim 2, wherein said ratio can be adjusted.

4. A dosing device according to claim 2 or 3, wherein said dosing elements are mechanically interconnected.

5. A dosing device according to claim 4, wherein said dosing elements are interconnected via a lever mechanism.

6. A dosing device according to claim 2 or 3, wherein said dosing elements are hydraulically interconnected.

7. A dosing device according to any one of the preceding claims 1 - 6 for dosing three mediums, wherein said dosing device is provided with three cylinder/piston units, whilst the respective dosing elements of the first and the second cylinder/piston unit are mechanically interconnected in such a manner that the mediums corresponding therewith can be dosed in a predetermined ratio of at least substantially equal amounts, whilst the dosing element of the third cylinder/piston unit is connected, via a lever mechanism, to the assembly of the other dosing elements in such a manner that the third medium can be fine-dosed in a predetermined ratio.

8. A dosing device according to claim 7, wherein the dosing elements of said first and said second cylinder/piston unit are interconnected by means of a rod, to which rod said third element is connected by means of a lever, which lever is fixedly mounted near/at one of its ends.

9. A dosing device according to claim 8, wherein said third dosing element is connected to the lever at varying distances from said fixed end.

10. A method for dosing at least one medium, in particular, but not exclusively, a viscous medium, to be used in a dosing device according to any one of the preceding claims 1 - 9, wherein
- said medium is pumped to a cylinder/piston unit comprising a piston which is capable of reciprocating movement within a cylinder, said piston on either side defining a first and a second cylinder space respectively;
- the medium supplied by said pump is directed to one cylinder space by a first control valve and discharged from the other cylinder space by a second control valve, or vice versa, depending on the control position of said control valves;
wherein a dosing element of the piston extending outside said cylinder/piston unit is displaced during the movement of said piston, thereby dosing said medium proportionally, characterized in that use is made of means for reversing the control position of the control valves in dependence on a predetermined magnitude of the pressure within the cylinder.
